# EUROPEAN PATENT SPECIFICATION

(11) **EP 4 308 409 B1**
(45) Date of publication and mention of the grant of the patent: **24.09.2025**
(21) Application number: 21716138.9
(22) Date of filing: 29.03.2021
(51) Int. Cl.: H02M 7/217, H02M 7/219, B60L 53/22

(54) **AC/DC CONVERTER AND A CONTROL METHOD THEREOF FOR CHARGING ELECTRICAL VEHICLES**
WECHSELSTROM-GLEICHSTROM-WANDLER UND STEUERVERFAHREN DAFÜR ZUM LADEN VON ELEKTROFAHRZEUGEN
CONVERTISSEUR CA/CC ET PROCÉDÉ ASSOCIÉ DE COMMANDE POUR CHARGER DES VÉHICULES ÉLECTRIQUES

(43) Date of publication of application: 24.01.2024
(73) Proprietor: Huawei Technologies Co., Ltd., Shenzhen, Guangdong 518129 (CN); Fraunhofer-Gesellschaft zur Förderung der angewandten Forschung e.V., 80686 München (DE)
(72) Inventor: CHEN, Haitao, 80992 Munich (DE); HU, Zhixiang, 80992 Munich (DE); ZHANG, Xingzhong, 80992 Munich (DE); SHUAI, Peng, 80992 Munich (DE); HOENE, Eckart, 13355 Berlin (DE)
(74) Representative: Körber, Martin Hans
(86) International application number: PCT/EP2021/058128
(87) International publication number: WO 2022/207065

(56) References cited:
- WO-A1-2019/109573
- WO-A1-2021/022886
- DE-A1- 102020 106 660
- US-A1- 2020 321 796

## Description

### TECHNICAL FIELD

The present disclosure refers to the technical field of alternating current/direct current (AC/DC) converter technology suitable for charging electrical vehicles (EV).

In this regard, the present disclosure refers to an AC/DC converter for an on board charger (OBC).

The present disclosure also refers to an OBC for an electrical vehicle, a charging station for an electrical vehicle, and an uninterruptible power supply (UPS) system.

Furthermore, the present disclosure refers to an AC/DC power supply.

### BACKGROUND

Vehicle electrification is being promoted by many local and national governments in responding to the urgent need for reducing fossil fuel consumption and emissions of carbon dioxide and other green-house gases and harmful particulates from the transportation sector. To help accelerate the acceptance of EVs, low-cost, high power density OBCs are highly desirable. In addition, chargers with bi-directional power flow capability can enhance the functionality and value of the vehicles by providing additional capabilities.

In addition, more and more people hope to reduce the charging time of electric vehicles, which means that the charging power of OBC will become larger and larger, and the high-power OBC requires three-phase AC input. For places without three-phase power distribution, It is also necessary to be able to charge with a single AC input, so the OBC needs to be compatible with three-phase and single-phase inputs.

WO 2021/022886 A1 discloses a converter comprising an AC unit, a switching unit, a conversion unit, a direct-current unit and a controller. US 2020/321796 A1 discloses a single-phase and three-phase compatible circuit and a charge-discharge apparatus. WO 2019/109573 A1 discloses a charging control circuit compatible with single-phase and three-phase ACs. DE 10 2020 106660 A1 proposes to use a DAB circuit instead of other converter topologies like the CLLC.

### SUMMARY

In view of the above-mentioned problems and disadvantages, the present disclosure aims to improve the current implementations.

The invention refers to an AC/DC converter according to claim 1 and a corresponding control method according to claim 11. Preferred embodiments are defined in the dependent claims.

It is an object of the present disclosure to provide improved AC/DC conversion. Especially, it is an object to provide a more simplified AC/DC conversion, which is compatible with three-phase and single-phase inputs.

According to an aspect of the disclosure, an alternating current/direct current (AC/DC) converter for an on board charger (OBC) is provided. The AC/DC converter comprises a three-phase-input comprising three inputs; a single-stage dual-active bridge (DAB) circuit; and an auxiliary circuit. The auxiliary circuit comprises two switching means and energy storage means, wherein the auxiliary circuit comprises at least two branches, wherein two branches each comprise one of the switching means, wherein at least one branch is connected to an input which is a single-phase AC input, wherein another branch is connected to an input which is not a single-phase AC input, and wherein the other branch comprises the energy storage means.

In other words, the auxiliary circuit, at least, comprises two branches. One of the branches is connected to an input which is used as a three-phase input. Another of the branches is connected to an input which is used as a single-phase input. One of the branches at least comprises the energy storage means and one of the switching means. The other branch comprises only one of the switching means.

The AC/DC converter may be suitable for an OBC, a charging station for an electrical vehicle, an uninterruptible power supply (UPS), or an AC/DC power supply.

According to another aspect of the disclosure, an OBC for an electrical vehicle is provided. The OBC comprises the AC/DC converter. The AC/DC converter may be modified according to any one of the optional embodiments described below.

According to another aspect of the disclosure, a charging station for an electrical vehicle is provided. The charging station comprises the AC/DC converter. The AC/DC converter may be modified according to any one of the optional embodiments described below.

According to another aspect of the disclosure, a UPS system, comprising the AC/DC converter, is provided The AC/DC converter may be modified according to any one of the optional embodiments described below.

According to another aspect of the disclosure, AC/DC power supply, comprising the AC/DC converter, is provided. The AC/DC converter may be modified according to any one of the optional embodiments described below.

According to another aspect of the disclosure, a control method for an AC/DC converter is provided. The control method may be carried out for an AC/DC converter in an OBC, in a charging station for an electrical vehicle, in a UPS, or in an AC/DC power supply.

The AC/DC converter comprises a three-phase-input comprising three inputs; a single-stage dual-active bridge (DAB) circuit; and an auxiliary circuit with at least two branches, comprising two switching means and energy storage means. Alternatively or additionally the AC/DC converter is configured and constructed according to an aspect of the disclosure. The AC/DC converter may be modified according to any one of the optional embodiments described below.

The method comprises different method steps, which are carried out depending on the connected input(s) and depending on a switching state of the electrical circuit of the AC/DC converter:
The method comprises,
- in case of three-phase AC input,
operating the auxiliary circuit such that the energy storage means does not participate in the operation of the circuit, and the switching means remain(s) disconnected.

The method comprises,
- when an input voltage at the inputs is converted to a single-phase AC input for the single-stage DAB circuit, and
- when the input voltage is at a higher level,
operating the auxiliary circuit such that a remaining circuit of the single DAB circuit connected to the energy storage means operates in a BUCK state, and the energy is stored in the energy storage means.

The method comprises,
- when an input voltage at the inputs is converted to a single-phase AC input for the single-stage DAB circuit, and
- when the input voltage changes from a higher level to a lower level,
operating the auxiliary circuit such that the remaining circuit of the single-stage DAB connected to the energy storage means operates in a BOOST state, and the energy storage means replenishes a bus of the single-stage DAB; and operating the auxiliary circuit such that, when input AC voltage crosses zero, the switching means switch to a working state.

The method may comprise method steps according to features of any of the optional embodiments of the AC/DC converter.

The disclosure provides a solution for compatibility of an AC/DC converter for single-phase input and three-phase input that can be realized with few components. Especially, the disclosure provides a less complex solution for an AC/DC-converter for on-board-chargers, which is less prone to unwanted artefacts, such as unwanted oscillations. Furthermore, due to a low complexity, lower maintenance effort is necessary.

The switching means provide that in the single-phase input mode, the capacitor is always connected to the input which is not used for the three-phase input mode. Thereby, the connected capacitor, which is only used in the single-phase input mode, is charged with a potential by the auxiliary circuit in the single-phase-input mode.

Furthermore, the disclosure provides that despite of bus voltage ripple at large single-phase AC input, a larger capacitor is not required. Furthermore, inductance and bidirectional switching means, such as a bidirectional switch tube, can be used to obtain a single-stage AC input compatibility.

By the provided solution, it can be achieved a higher power density with lower cost, while packaging of the AC/DC converter is facilitated. Furthermore, the disclosure provides a better tailored and more efficient solution for power converters in electrical vehicle (EV) applications compared to the prior art.

The solution provides an AC/DC converter for a cost-reduced, high power density OBC. The on board charger provides bi-directional power flow capability which can enhance the functionality and value of electrical vehicles by providing additional charging capabilities.

Furthermore, the improved AC/DC converter, being compatible with single-phase and three-phase inputs, allows reducing the charging time for electric vehicles. Furthermore, the OBC can also be used at places without three-phase power distribution, in which one is able to charge with a single AC input.

Optionally, the auxiliary circuit may comprise three branches. Two branches each may be connected to the input which is the single-phase AC input, and the other branch, with the energy storage means, may be connected to the input which is not the single-phase AC input. An auxiliary circuit with three connections can achieve a more even load on the modules of the DAB with regard to the voltage phase at the single-phase inputs. This in turn means that the components suffer less, making the entire AC/DC converter less maintenance-intensive.

Optionally, the auxiliary circuit may be configured and connected with two or three branches to the inputs such that in case of three-phase AC input, the energy storage means does not participate in the operation of the circuit, and the switching means remain(s) disconnected. This feature provides that the auxiliary circuit does not operate in three-phase input mode. In other words, in the three-phase input mode the DAB behaves as if the auxiliary circuit was not connected at all. This has the advantage that in a three-phase input mode no additional load or even less likely artifacts such as unwanted vibrations can occur.

Optionally, the auxiliary circuit may be configured and connected with two or three branches to the inputs such that
- when an input voltage at the inputs is converted to a single-phase AC input for the single-stage DAB circuit, and
- when the input voltage is at a higher level,
a remaining circuit of the single DAB circuit connected to the energy storage means operates in a BUCK state, and the energy is stored in the energy storage means. This especially refers to a high voltage scenario. In this case, the remaining circuit operates like an equivalent BUCK. This is a circuit that can implement a voltage reduction function, but the circuit cannot be simply equivalent to a buck circuit. For the previously mentioned single-stage DAB topology, a bus capacitance is not necessary when the three-phase input is used. Instead, the storage capacitor is used to store energy.

Optionally, the auxiliary circuit may be configured and connected with two or three branches to the inputs such that
- when an input voltage at the inputs is converted to a single-phase AC input for the single-stage DAB circuit, and
- when the input voltage changes from a higher level to a lower level,
a remaining circuit of the single-stage DAB connected to the energy storage means operates in a BOOST state, and the energy storage means replenishes a bus of the single-stage DAB. This refers to a low voltage scenario. In this case, the remaining circuit works like an equivalent BOOST. In other words, in a second phase, when the voltage drops or is at a lower level, the DAB is fed from the capacitor. Thus, the DAB can always operate as if it was fed by a three-phase input.

Optionally, the auxiliary circuit may be configured and connected with two or three branches to the inputs such that when input AC voltage crosses zero, the switching means switch to a working state. This refers to a zero crossing scenario of the voltage. Due to the periodicity of the single-phase input mode voltage a regular switching of the switches and therefore a regular charging and discharging of the capacitor can be guaranteed. A capacitor capacity would then be selected according to an expected voltage load.

Optionally, each of the switching means and the energy storage means may be connected in parallel. Such a design is especially provided if there are three branches. In combination with the use of three branches, such a design improves that the components of the DAB are used more evenly.

Optionally, a first switching means and the storage means may be connected in series, and a second switching means may be connected in parallel with the first switching means and the storage means. It is possible that the energy storage means comprises multiple capacitors. The energy can be stored in the capacitor. When the input voltage decreases, the capacitor can release the energy. The optional embodiment may be applied for two branches or it may be applied for three branches. In case of three branches, there may be used two capacitors-such as a first capacitor which is always connected to the input used for the three-phase mode and another capacitor which is - depending on the voltage phase- connected to the input used for single-phase and three-phase mode. In case of single-phase input modes with voltage curves with strong rise/fall and with very large voltage peaks, it may be useful to use an auxiliary circuit with two branches and a capacitor with a high selected capacitance corresponding to the voltage peaks.

Optionally, the switching means may be a switch tube; and/or the energy storing means may be a capacitor. The inductance and the bidirectional switch tube in the original circuit can be used to achieve single-stage AC input compatibility. Use of switch tube and capacitor have the advantage that they are robust and low-maintenance components.

Optionally, the auxiliary circuit used for the method may comprise features of at least one of the previously described optional embodiments.

These and other aspects of the disclosure will be apparent from and elucidated with reference to the implementation forms described hereinafter. Individual features disclosed in the implementation forms can constitute alone or in combination an aspect of the present disclosure. Features of the different implementation forms can be carried over from one implementation form to another implementation form.

### BRIEF DESCRIPTION OF DRAWINGS

The above described aspects and implementation forms of the present disclosure will be explained in the following description of specific embodiments in relation to the enclosed drawings, in which
- Fig. 1: schematically shows a simplified AC/DC converter circuit according to an embodiment;
- Fig. 2: schematically shows a simplified AC/DC converter circuit according to the embodiment of Fig. 1, a voltage curve diagram and current flow in a first voltage phase marked in the voltage curve diagram;
- Fig. 3: schematically shows the simplified AC/DC converter circuit according to the embodiment of Fig. 1, a voltage curve diagram and current flow in a second voltage phase marked in the voltage curve diagram;
- Fig. 4: schematically shows a simplified AC/DC converter circuit according to another embodiment and a voltage curve diagram, wherein a first voltage phase is marked in the voltage curve diagram;
- Fig. 5: schematically shows the simplified AC/DC converter circuit according to the other embodiment and a voltage curve diagram, wherein a second voltage phase is marked in the voltage curve diagram; and
- Fig. 6: shows a flow diagram of a control method according to an embodiment.

### DETAILED DESCRIPTION

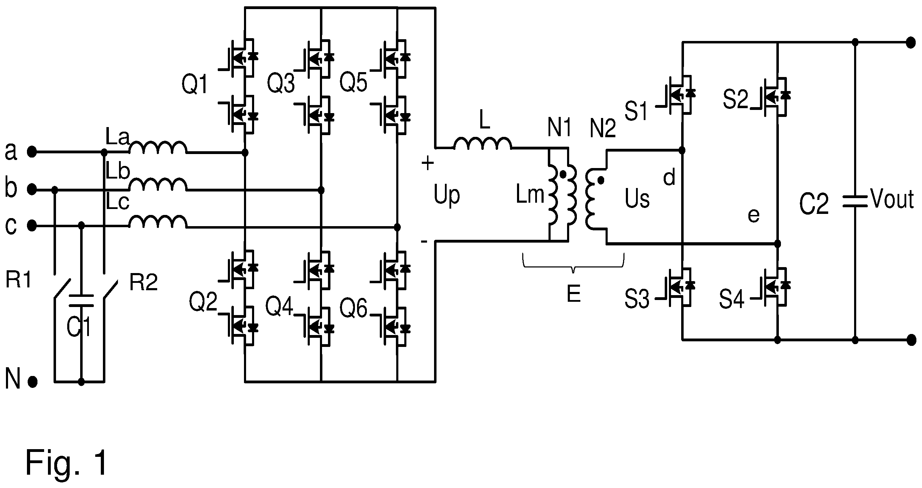

Figure 1 schematically shows a simplified AC/DC converter circuit according to an embodiment. The AC/DC converter circuit is suitable for a three-phase input mode and for a single-phase-input mode. In accordance with the three-phase input mode capability, the circuit provides three inputs a, b, c and for the single-phase input mode capability, the inputs a and b of the circuit can be used.

The circuit comprises the three inputs a, b, c. The inputs a, b, c are connected to a single-stage dual-active-bridge (DAB) circuit. The DAB circuit comprises energy transfer means E. On one side of the energy transfer means E, which is the side of the inputs a, b, c, a voltage Up is applied. On another side of the energy transfer means E, a voltage Us is applied. On one side of the energy transfer means E multiple switching means Q1 to Q6 and an inductive element L, and on another side of the energy transfer means E multiple switching means S1 to S4 and energy storage means C2, which is a capacitor in the exemplary embodiment, are provided. The output of the DAB circuit is the output voltage Vout, to which the energy transfer means E is connected via output lines d, e. Each access of the DAB circuit is connected via an inductive element La, Lb, Lc to a respective input a, b, c.

In addition to the DAB circuit, the circuit of the AC/DC converter comprises an auxiliary circuit. The auxiliary circuit comprises two switching means R1, R2 and energy storage means C1, which is a capacitor in the exemplary embodiment. The auxiliary circuit comprises three branches.

Two branches each comprise one of the switching means R1, R2. The switching means R1, R2 are switch tubes in the exemplary embodiment. A third branch comprises the energy storage means C1. The two branches with the switching means R1, R2 are respectively connected to one of the inputs a, b which each are used as a single-phase AC input. The third branch with the energy storage means C1 is connected to an input c which is not a single-phase AC input. This input c is used in a three-phase mode.

The operating mode of the AC/DC converter depends on the voltage phase as well as on operation in the single-phase mode, i.e. the use of both inputs a, b, or operation in the three-phase mode, i.e. the use of all three inputs a, b, c. The operating modes will be explained with regard to Figures 1 to 3.

In case of a three-phase alternating current (AC) input, that means the use of all three inputs a, c, b, the switch tubes are disconnected to the inputs a and b. Thus, the energy storage means C1 is not connected to any circuit.

In case of a single-phase AC input, that means the use of the inputs a and b, the single-phase AC is connected to a and b terminals.

When a potential at the input a is higher than a potential at the input b, switching means R1 is closed and switching means R2 is open. In this voltage phase, C1 is connected to inputs b and c. When a potential at the input b is higher than a potential at the input a, switching means R2 is closed and switching means R1 is open. In this voltage phase, C1 is connected to inputs a and c.

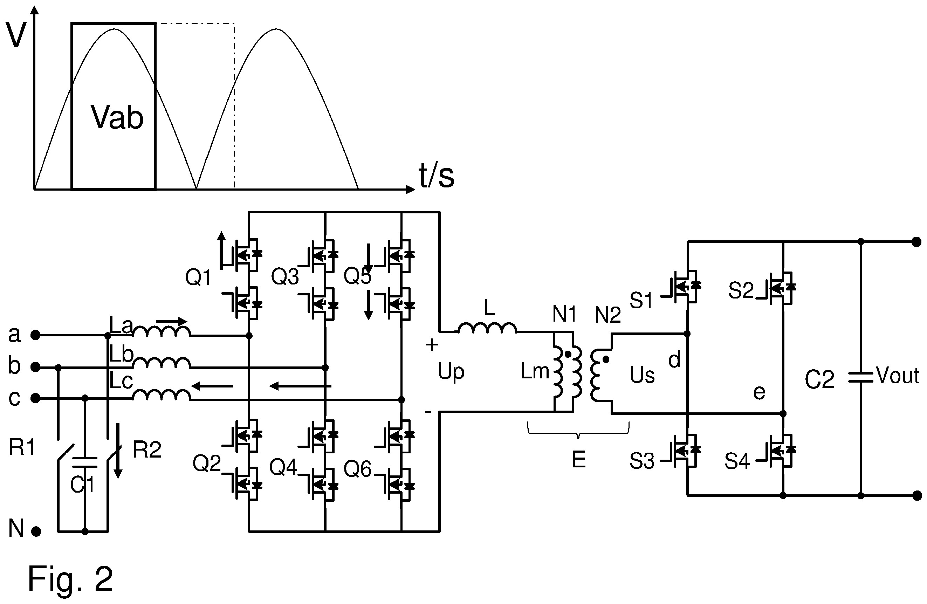

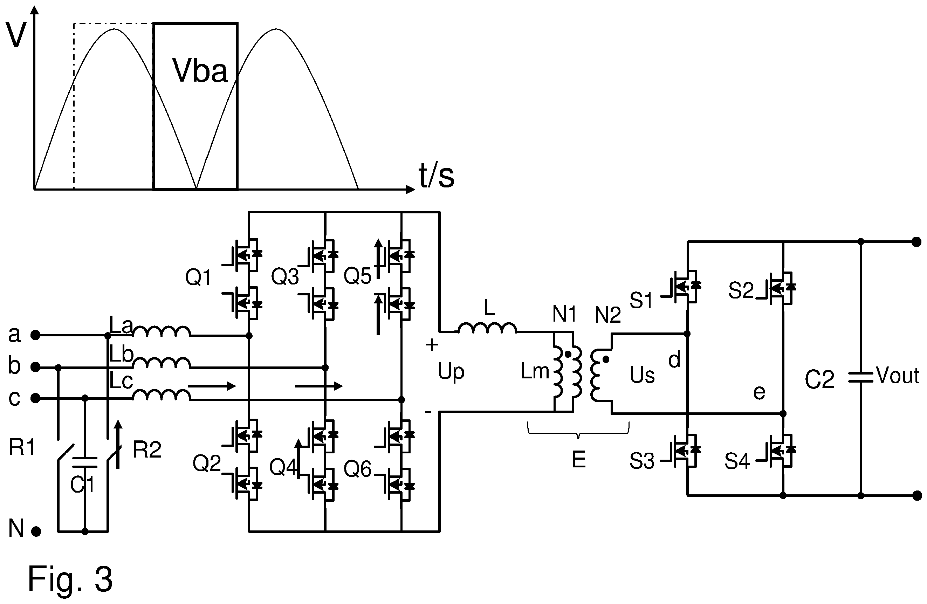

Fig. 2 schematically shows a simplified AC/DC converter circuit according to the embodiment of Fig. 1, a voltage curve diagram and current flow in a first voltage phase marked in the voltage curve diagram and Fig. 3 schematically shows the simplified AC/DC converter circuit according to the embodiment of Fig. 1, a voltage curve diagram and current flow in a second voltage phase marked in the voltage curve diagram. The two Figures show the case when a potential at the input b is higher than a potential at the input a, and the switching means R2 is closed and switching means R1 is open. In this voltage phase, C1 is connected to inputs a and c.

The switching phase of R2 being closed, and potential at the input a being higher than the potential at the input b corresponds to the voltage phase indicated by the reference letter "Vab" in the voltage curve diagram plotted against time t/s, shown above the circuit in Fig. 2. In this voltage phase, the energy storage means C1 is connected to inputs a and c.

When Vab is high, the switching means Q5, Q6 and Q4 operate and the energy is stored in the energy storage means C1 (see current flow in the circuit indicated by the drawn-through arrows in Fig. 2).

In the switching phase of R2 being closed and Vba being low (see voltage phase indicated by the reference letter "Vba" in the voltage curve diagram plotted against time t/s, shown above the circuit in Fig. 3), the energy stored in the energy storage means C1 is transmitted to a main power loop through a and c terminals corresponding to inputs a and c (see current flow in the circuit indicated by the drawn-through arrows in Fig. 3).

Similar to the case described above, the AC/DC converter circuit operates in case that the switching means R1 is closed and the switching means R2 is open: when Vab is high, the energy is stored in the energy storage means C1. When the Vba is low, the energy stored in the energy storage means C1 is transmitted to a main power loop through the b and c inputs.

In case of a single-phase AC input the switching means R1 and R2 switch their state when the AC voltage crosses zero (see the voltage curve diagrams plotted against time t/s in Figures 2 and 3).

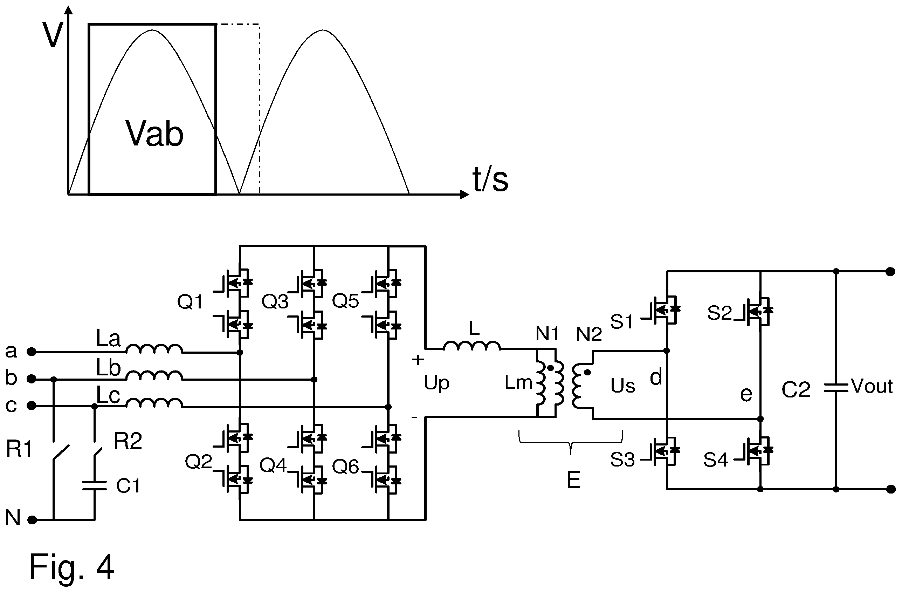

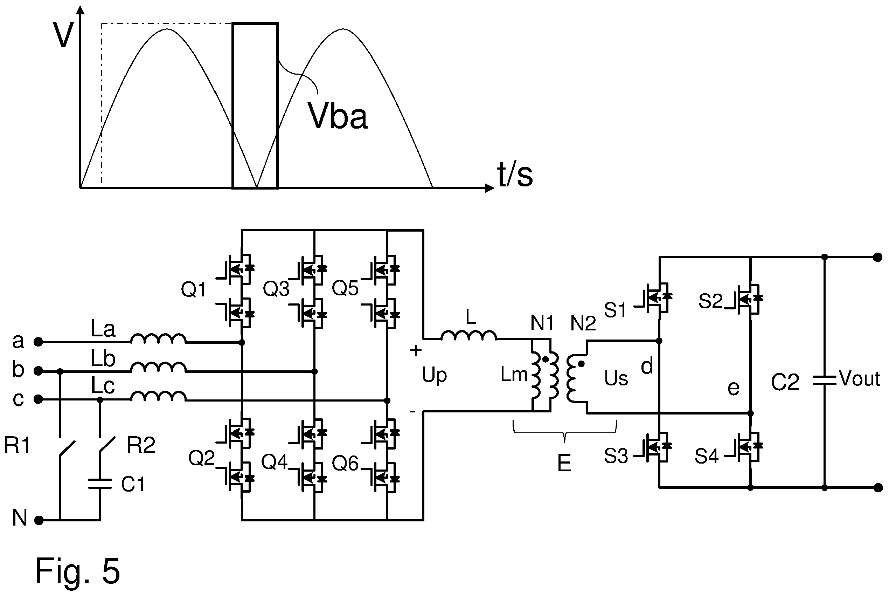

Fig. 4 schematically shows a simplified AC/DC converter circuit according to another embodiment and a voltage curve diagram, wherein a first voltage phase is marked in the voltage curve diagram and Fig. 5 schematically shows the simplified AC/DC converter circuit according to the other embodiment and a voltage curve diagram, wherein a second voltage phase is marked in the voltage curve diagram.

The circuit is similar to the circuit according to the first embodiment. The auxiliary circuit of the second embodiment is different from the auxiliary circuit of the first embodiment. The auxiliary circuit comprises two switching means R1, R2 and energy storage means C1. Furthermore, the auxiliary circuit comprises two branches. One of the branches comprises the switching means R1 and the other of the two branches comprises the energy storage means C1 and one of the switching means R2. The branch with the switching means R1 is connected to an input b which is a single-phase AC input. The other branch is connected to an input c which is not a single-phase AC input. The input c is the three-phase AC input. The branch comprising the switching means R1 is further connected to ground N.

The circuit according to the embodiment of Fig. 4 has a similar functioning as the circuit according to the embodiment of Figures 1 to 3. As can be seen in the voltage curve diagrams plotted against time t/s of Figures 4 and 5, the voltage phases, in which the circuit operates, differ from the voltage phases shown in the voltage curve diagrams of Figures 2 and 3. While the voltage phases for the circuit of the first embodiment according to Figures 1 to 3 have circuit phases equally distributed over time, i.e. both switching means R1, R2 operate over an equal time interval, the voltage phases for the circuit of the second embodiment according to Figures 4 and 5 have circuit phases unequally distributed over time, i.e. the first switching means R1 operates over a different time interval than the second switching means R2. Especially, the first switching means R1 operates in the voltage interval indicated by the reference letter "Vab" and the second switching means R2 operates in the shorter voltage interval indicated by the reference letter "Vba".

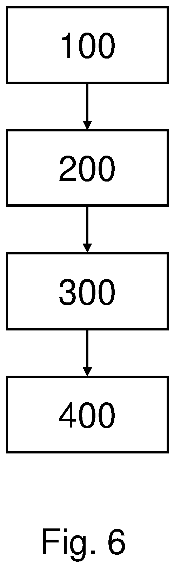

Fig. 6 shows a flow diagram of a control method according to an embodiment. The method is a control method for an AC/DC converter. The AC/DC converter may be configured and constructed according to any of the previously described embodiments. The AC/DC converter, at least, comprises a three-phase-input comprising three inputs a, b, c; a single-stage dual-active bridge (DAB) circuit; and an auxiliary circuit with at least two branches, comprising two switching means R1, R2 and energy storage means C1.

According to a step indicated by the reference number "100", the method comprises, in case of three-phase AC input, operating the auxiliary circuit such that the energy storage means C1 does not participate in the operation of the circuit, and the switching means R1, R2 remain(s) disconnected.

According to a step indicated by the reference number "200", the method comprises, when an input voltage at the inputs a, b, c is converted to a single-phase AC input for the single-stage DAB circuit, and when the input voltage is at a higher level,
operating the auxiliary circuit such that a remaining circuit of the single DAB circuit connected to the energy storage means C1 operates in a BUCK state, and the energy is stored in the energy storage means C1.

According to a step indicated by the reference number "300", the method comprises, when an input voltage at the inputs a, b, c is converted to a single-phase AC input for the single-stage DAB circuit, and when the input voltage changes from a higher level to a lower level, operating the auxiliary circuit such that the remaining circuit of the single-stage DAB connected to the energy storage means C1 operates in a BOOST state, and the energy storage means C1 replenishes a bus of the single-stage DAB.

According to a step indicated by the reference number "400", the method comprises operating the auxiliary circuit such that, when input AC voltage crosses zero, the switching means R1, R2 switch to a working state.

The disclosure has been described in conjunction with various implementations herein.

However, other variations to the disclosed implementation forms can be understood and effected by those skilled in the art in practicing the claimed disclosure, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

### Reference signs list

- a, b, c: input
- d, e: output line
- E: energy transfer means
- L: inductive means
- N: ground
- C1: energy storage means
- C2: energy storage means
- N1: component of energy transfer means
- N2: component of energy transfer means
- R1: switching means
- R2: switching means
- S1-S4: switching means
- Q1-Q6: switching means
- Lm: component of energy transfer means
- Vab: voltage phase
- Vba: voltage phase
- Vout: output voltage

- 100: operating the auxiliary circuit such that the energy storage means does not participate in the operation of the circuit, and the switching means remain(s) disconnected
- 200: when an input voltage at the inputs is converted to a single-phase AC input for the single-stage DAB circuit, and when the input voltage is at a higher level, operating the auxiliary circuit such that a remaining circuit of the single DAB circuit connected to the energy storage means operates in a BUCK state, and the energy is stored in the energy storage means
- 300: when an input voltage at the inputs is converted to a single-phase AC input for the single-stage DAB circuit, and when the input voltage changes from a higher level to a lower level, operating the auxiliary circuit such that the remaining circuit of the single-stage DAB connected to the energy storage means operates in a BOOST state, and the energy storage means replenishes a bus of the single-stage DAB
- 400: operating the auxiliary circuit such that, when input AC voltage crosses zero, the switching means switch to a working state

## Claims

1. Alternating current/direct current, AC/DC, converter for an on board charger, OBC, wherein the AC/DC converter is suitable for a three-phase input mode and for a single-phase-input mode, the AC/DC converter comprising
a three-phase AC input comprising three inputs a, b, c, wherein each of said inputs a and
b is configured to be capable of acting as a single-phase AC input, and the input c is configured not to function as
a single-phase AC input;
a single-stage dual-active bridge, DAB, circuit; and
an auxiliary circuit,
wherein the auxiliary circuit comprises two switching means (R1, R2) and energy storage means (C1),
wherein the auxiliary circuit comprises at least two branches,
wherein two branches each comprise one of the switching means (R1, R2),
wherein at least one branch is connected to the input a, or input b,
wherein another branch is connected to the input c, and
wherein the other branch comprises the energy storage means (C1).

2. The AC/DC converter according to claim 1,
wherein the auxiliary circuit comprises three branches,
wherein two branches are connected to the inputs a and b, respectively,
wherein the other branch, with the energy storage means (C1), is connected to the input c.

3. The AC/DC converter according to claim 1 or 2,
wherein the auxiliary circuit is configured and connected with two or three branches to the three-phase AC inputs a, b, c such that in case of three-phase AC input, the energy storage means (C1) is configured not to participate in the operation of the circuit, and the switching means (R1, R2) is/are configured to remain disconnected.

4. The AC/DC converter according to any of the preceding claims,
wherein the auxiliary circuit is configured and connected with two or three branches to the three-phase AC inputs a, b, c such that
• when an input voltage at the three-phase AC inputs a, b, c is converted to a single-phase AC input for the single-stage DAB circuit, and
• when the input voltage is at a higher level,
a remaining circuit of the single DAB circuit connected to the energy storage means (C1) operates in a BUCK state, and the energy is stored in the energy storage means (C1).

5. The AC/DC converter according to any of the preceding claims,
wherein the auxiliary circuit is configured and connected with two or three branches to the three-phase AC inputs a, b, c such that
• when an input voltage at the three-phase AC inputs a, b, c is converted to a single-phase AC input for the single-stage DAB circuit, and
• when the input voltage changes from a higher level to a lower level,
a remaining circuit of the single-stage DAB connected to the energy storage means (C1) operates in a BOOST state, and the energy storage means (C1) replenishes a bus of the single-stage DAB.

6. The AC/DC converter according to any of the preceding claims,
wherein the auxiliary circuit is configured and connected with two or three branches to the three-phase AC inputs a, b, c such that when input AC voltage crosses zero, the switching means (R1, R2) switch to a working state.

7. The AC/DC converter according to any of the preceding claims,
wherein each of the switching means (R1, R2) and the energy storage means (C1) are connected parallel to one another.

8. The AC/DC converter according to any of the preceding claims,
wherein a first switching means (R1) and the storage means (C1) are connected in series, and
wherein a second switching means (R2) is connected in parallel with the first switching means (R1) and the storage means (C1).

9. The AC/DC converter according to any of the preceding claims,
wherein each switching means (R1, R2) is a switch tube; and/or
wherein the energy storing means (C1) is a capacitor.

10. On board charger, OBC,
for an electrical vehicle, or a charging station for an electrical vehicle, or an uninterruptible power supply (UPS) system, or an AC/DC power supply, comprising the AC/DC converter according to at least one of the preceding claims.

11. Control method for an AC/DC converter according to any of the preceding claims 1 to 9, comprising:
to operate the AC/DC converter in the three-phase input mode, operating (100) the auxiliary circuit such that the energy storage means (C1) does not participate in the operation of the circuit, and the switching means (R1, R2) remain(s) disconnected.

12. The control method according to claim 11, further comprising:
• when an input voltage at the three-phase AC inputs a, b, c is converted to a single-phase AC input for the single-stage DAB circuit, and
• when the input voltage is at a higher level,
operating (200) the auxiliary circuit such that a remaining circuit of the single DAB circuit connected to the energy storage means (C1) operates in a BUCK state, and the energy is stored in the energy storage means (C1).

13. The control method according to claim 11 or 12, further comprising;
• when an input voltage at the inputs a, b, c is converted to a single-phase AC input for the single-stage DAB circuit, and
• when the input voltage changes from a higher level to a lower level,
operating (300) the auxiliary circuit such that the remaining circuit of the single-stage DAB connected to the energy storage means (C1) operates in a BOOST state, and the energy storage means (C1) replenishes a bus of the single-stage DAB.

14. The control method according to any of the preceding claims 11 to 13, further comprising:
operating (400) the auxiliary circuit such that, when input AC voltage crosses zero, the switching means (R1, R2) switch to a working state.

## Patentansprüche

1. Wechselstrom-Gleichstrom-Wandler, AC/DC-Wandler, für ein Bordladegerät, OBC,
wobei der AC/DC-Wandler für einen dreiphasigen Eingangsmodus und für einen einphasigen Eingangsmodus geeignet ist und wobei der AC/DC-Wandler Folgendes umfasst
einen dreiphasigen Wechselspannungseingang, der drei Eingänge a, b, c umfasst, wobei jeder der Eingänge a und b dazu konfiguriert ist, in der Lage zu sein, als ein einphasiger Wechselspannungseingang zu wirken, und der Eingang c dazu konfiguriert ist, nicht als ein einphasiger Wechselspannungseingang zu funktionieren;
eine einstufige Dual-Active-Bridge-Schaltung, DAB-Schaltung; und
eine Hilfsschaltung,
wobei die Hilfsschaltung zwei Schaltmittel (R1, R2) und ein Energiespeichermittel (C1) umfasst,
wobei die Hilfsschaltung mindestens zwei Zweige umfasst,
wobei zwei Zweige jeweils eines der Schaltmittel (R1, R2) umfassen,
wobei mindestens ein Zweig an den Eingang a oder den Eingang b angeschlossen ist,
wobei ein weiterer Zweig an den Eingang c angeschlossen ist und wobei der andere Zweig das Energiespeichermittel (C1) umfasst.

2. AC/DC-Wandler nach Anspruch 1,
wobei die Hilfsschaltung drei Zweige umfasst,
wobei zwei Zweige an den Eingang a bzw. b angeschlossen sind, wobei der andere Zweig, mit dem Energiespeichermittel (C1), an den Eingang c angeschlossen ist.

3. AC/DC-Wandler nach Anspruch 1 oder 2,
wobei die Hilfsschaltung derart konfiguriert und mit zwei oder
drei Zweigen an die dreiphasigen Wechselspannungseingänge a, b, c angeschlossen ist, dass, im Falle eines dreiphasigen Wechselspannungseingangs, das Energiespeichermittel (C1) dazu konfiguriert ist, nicht an dem Betrieb der Schaltung teilzunehmen, und das/die Schaltmittel (R1, R2) dazu konfiguriert ist/sind, ausgeschaltet zu bleiben.

4. AC/DC-Wandler nach einem der vorhergehenden Ansprüche, wobei die Hilfsschaltung derart konfiguriert und mit zwei oder drei Zweigen an die dreiphasigen Wechselspannungseingänge a, b**,** c angeschlossen ist, dass
• wenn eine Eingangsspannung an den dreiphasigen Wechselspannungseingängen a, b, c in einen einphasigen Wechselspannungseingang für die einstufige DAB-Schaltung umgewandelt wird und
• wenn die Eingangsspannung auf einem höheren Niveau liegt, eine verbleibende Schaltung der einzelnen DAB-Schaltung, die an das Energiespeichermittel (C1) angeschlossen ist, in einem BUCK-Zustand arbeitet und die Energie in dem Energiespeichermittel (C1) gespeichert wird.

5. AC/DC-Wandler nach einem der vorhergehenden Ansprüche, wobei die Hilfsschaltung derart konfiguriert und mit zwei oder drei Zweigen an die dreiphasigen Wechselspannungseingänge a, b, c angeschlossen ist, dass
• wenn eine Eingangsspannung an den dreiphasigen Wechselspannungseingängen a, b, c in einen einphasigen Wechselspannungseingang für die einstufige DAB-Schaltung umgewandelt wird und
• wenn die Eingangsspannung von einem höheren zu einem niedrigeren Niveau wechselt,
eine verbleibende Schaltung der einstufigen DAB, die an das Energiespeichermittel (C1) angeschlossen ist, in einem BOOST-Zustand arbeitet und das Energiespeichermittel (C1) einen Bus der einstufigen DAB wieder auffüllt.

6. AC/DC-Wandler nach einem der vorhergehenden Ansprüche, wobei die Hilfsschaltung derart konfiguriert und mit zwei oder drei Zweigen an die dreiphasigen Wechselspannungseingänge a, b, c angeschlossen ist, dass, wenn die Eingangswechselspannung den Nullpunkt überschreitet, die Schaltmittel (R1, R2) in einen Arbeitszustand umschalten.

7. AC/DC-Wandler nach einem der vorhergehenden Ansprüche, wobei jedes der Schaltmittel (R1, R2) und das Energiespeichermittel (C1) parallel zueinander angeschlossen sind.

8. AC/DC-Wandler nach einem der vorhergehenden Ansprüche, wobei ein erstes Schaltmittel (R1) und das Speichermittel (C1) in Reihe angeschlossen sind und
wobei ein zweites Schaltmittel (R2) parallel zu dem ersten Schaltmittel (R1) und dem Speichermittel (C1) angeschlossen ist.

9. AC/DC-Wandler nach einem der vorhergehenden Ansprüche, wobei jedes Schaltmittel (R1, R2) ein Schaltrohr ist; und/oder wobei das Energiespeichermittel (C1) ein Kondensator ist.

10. Bordladegerät, OBC, für ein elektrisches Fahrzeug oder eine Ladestation für ein elektrisches Fahrzeug oder ein unterbrechungsfreies Stromversorgungssystem (USV) oder eine AC/DC-Stromversorgung, umfassend den AC/DC-Wandler nach mindestens einem der vorhergehenden Ansprüche.

11. Steuerungsverfahren für einen AC/DC-Wandler nach einem der vorhergehenden Ansprüche 1 bis 9, umfassend:
Betreiben des AC/DC-Wandlers in dem dreiphasigen Eingangsmodus, wobei die Hilfsschaltung derart betrieben wird (100), dass das Energiespeichermittel (C1) nicht an dem Betrieb der Schaltung beteiligt ist und das/die Schaltmittel (R1, R2) ausgeschaltet bleibt/bleiben.

12. Steuerungsverfahren nach Anspruch 11, ferner umfassend:
• wenn eine Eingangsspannung an den dreiphasigen Wechselspannungseingängen a, b, c in einen einphasigen Wechselspannungseingang für die einstufige DAB-Schaltung umgewandelt wird und
• wenn die Eingangsspannung auf einem höheren Niveau liegt, Betreiben (200) der Hilfsschaltung derart, dass eine verbleibende Schaltung der einzelnen DAB-Schaltung, die an das Energiespeichermittel (C1) angeschlossen ist, in einem BUCK-Zustand arbeitet und die Energie in dem Energiespeichermittel (C1) gespeichert wird.

13. Steuerungsverfahren nach Anspruch 11 oder 12, ferner umfassend:
• wenn eine Eingangsspannung an den Eingängen a, b, c in einen einphasigen Wechselspannungseingang für die einstufige DAB-Schaltung umgewandelt wird und
• wenn die Eingangsspannung von einem höheren zu einem niedrigeren Niveau wechselt,
Betreiben (300) der Hilfsschaltung derart, dass die verbleibende Schaltung der einstufigen DAB, die an das Energiespeichermittel (C1) angeschlossen ist, in einem BOOST-Zustand arbeitet und das Energiespeichermittel (C1) einen Bus der einstufigen DAB wieder auffüllt.

14. Steuerungsverfahren nach einem der vorhergehenden Ansprüche 11 bis 13, ferner umfassend:
Betreiben (400) der Hilfsschaltung derart, dass, wenn die Eingangswechselspannung den Nullpunkt überschreitet, die Schaltmittel (R1, R2) in einen Arbeitszustand umschalten.

## Revendications

1. Convertisseur courant alternatif/courant continu, CA/CC, pour un chargeur embarqué, OBC,
dans lequel le convertisseur CA/CC est adapté à un mode d'entrée triphasé et à un mode d'entrée monophasé, le convertisseur CA/CC comprenant
une entrée CA triphasée comprenant trois entrées a, b, c, dans lequel chacune desdites entrées a et b est configurée pour être capable d'agir comme une entrée CA monophasée, et l'entrée c est configurée pour ne pas fonctionner comme une entrée CA monophasée ;
un circuit à double pont actif, DAB, à un étage ; et
un circuit auxiliaire,
dans lequel le circuit auxiliaire comprend deux moyens de commutation (R1, R2) et un moyen de stockage d'énergie (C1), dans lequel le circuit auxiliaire comprend au moins deux branches,
dans lequel les deux branches comprennent chacune l'un des moyens de commutation (R1, R2),
dans lequel au moins une branche est connectée à l'entrée a ou à l'entrée b,
dans lequel une autre branche est connectée à l'entrée c, et dans lequel l'autre branche comprend le moyen de stockage d'énergie (C1).

2. Convertisseur CA/CC selon la revendication 1,
dans lequel le circuit auxiliaire comprend trois branches, dans lequel deux branches sont connectées aux entrées a et b, respectivement,
dans lequel l'autre branche, avec le moyen de stockage d'énergie (C1), est connectée à l'entrée c.

3. Convertisseur CA/CC selon la revendication 1 ou 2,
dans lequel le circuit auxiliaire est configuré et connecté avec deux ou trois branches aux entrées CA triphasées a, b, c de sorte qu'en cas d'entrée CA triphasée, le moyen de stockage d'énergie (C1) est configuré pour ne pas participer au fonctionnement du circuit, et le(s) moyen(s) de commutation (R1, R2) est/sont configuré(s) pour rester déconnecté(s).

4. Convertisseur CA/CC selon l'une quelconque des revendications précédentes,
dans lequel le circuit auxiliaire est configuré et connecté avec deux ou trois branches aux entrées CA triphasées a, b, c de sorte que
• lorsqu'une tension d'entrée aux entrées CA triphasées a, b, c est convertie en une entrée CA monophasée pour le circuit DAB à un étage, et
• lorsque la tension d'entrée est à un niveau plus élevé,
un circuit restant du circuit DAB unique connecté au moyen de stockage d'énergie (C1) fonctionne dans un état BUCK, et l'énergie est stockée dans le moyen de stockage d'énergie (C1).

5. Convertisseur CA/CC selon l'une quelconque des revendications précédentes,
dans lequel le circuit auxiliaire est configuré et connecté avec deux ou trois branches aux entrées CA triphasées a, b, c de sorte que
• lorsqu'une tension d'entrée aux entrées CA triphasées a, b, c est convertie en une entrée CA monophasée pour le circuit DAB à un étage, et
• lorsque la tension d'entrée passe d'un niveau plus élevé à un niveau plus faible,
un circuit restant du DAB à un étage connecté au moyen de stockage d'énergie (C1) fonctionne dans un état BOOST, et le moyen de stockage d'énergie (C1) réapprovisionne un bus du DAB à un étage.

6. Convertisseur CA/CC selon l'une quelconque des revendications précédentes,
dans lequel le circuit auxiliaire est configuré et connecté avec deux ou trois branches aux entrées CA triphasées a, b, c de sorte que lorsque la tension CA d'entrée passe par zéro, les moyens de commutation (R1, R2) commutent vers un état de fonctionnement.

7. Convertisseur CA/CC selon l'une quelconque des revendications précédentes,
dans lequel chacun des moyens de commutation (R1, R2) et le moyen de stockage d'énergie (C1) sont connectés en parallèle l'un à l'autre.

8. Convertisseur CA/CC selon l'une quelconque des revendications précédentes,
dans lequel un premier moyen de commutation (R1) et le moyen de stockage (C1) sont connectés en série, et
dans lequel un second moyen de commutation (R2) est connecté en parallèle avec le premier moyen de commutation (R1) et le moyen de stockage (C1).

9. Convertisseur CA/CC selon l'une quelconque des revendications précédentes,
dans lequel chaque moyen de commutation (R1, R2) est un tube de commutation ; et/ou
dans lequel le moyen de stockage d'énergie (C1) est un condensateur.

10. Chargeur embarqué, OBC, pour un véhicule électrique, ou une station de charge pour un véhicule électrique, ou un système d'alimentation sans interruption (UPS), ou une alimentation électrique CA/CC, comprenant le convertisseur CA/CC selon au moins l'une des revendications précédentes.

11. Procédé de commande d'un convertisseur CA/CC selon l'une quelconque des revendications précédentes 1 à 9, comprenant :
pour faire fonctionner le convertisseur CA/CC en mode d'entrée triphasée, le fonctionnement (100) du circuit auxiliaire de sorte que le moyen de stockage d'énergie (C1) ne participe pas au fonctionnement du circuit, et que le(s) moyen(s) de commutation (R1, R2) reste(nt) déconnecté(s).

12. Procédé de commande selon la revendication 11, comprenant également :
• lorsqu'une tension d'entrée aux entrées CA triphasées a, b, c est convertie en une entrée CA monophasée pour le circuit DAB à un étage, et
• lorsque la tension d'entrée est à un niveau plus élevé,
le fonctionnement (200) du circuit auxiliaire de sorte qu'un circuit restant du circuit DAB à un étage connecté au moyen de stockage d'énergie (C1) fonctionne dans un état BUCK, et que l'énergie est stockée dans le moyen de stockage d'énergie (C1).

13. Procédé de commande selon la revendication 11 ou 12, comprenant également ;
• lorsqu'une tension d'entrée aux entrées a, b, c est convertie en une entrée CA monophasée pour le circuit DAB à un étage, et
• lorsque la tension d'entrée passe d'un niveau plus élevé à un niveau plus faible,
le fonctionnement (300) du circuit auxiliaire de sorte que le circuit restant du DAB à un étage connecté au moyen de stockage d'énergie (C1) fonctionne dans un état BOOST, et que le moyen de stockage d'énergie (C1) réapprovisionne un bus du DAB à un étage.

14. Procédé de commande selon l'une quelconque des revendications précédentes 11 à 13, comprenant également :
le fonctionnement (400) du circuit auxiliaire de sorte que, lorsque la tension CA d'entrée passe par zéro, les moyens de commutation (R1, R2) commutent vers un état de fonctionnement.
